## Europäisches Patentamt
## European Patent Office
## Office européen des brevets

(11) Veröffentlichungsnummer: **0 066 894 B1**

(12) **EUROPÄISCHE PATENTSCHRIFT**

(45) Veröffentlichungstag der Patentschrift:
13.11.85

(51) Int. Cl.⁴: **D 21 C  5/02**

(21) Anmeldenummer: 82105063.0

(22) Anmeldetag: 09.06.82

(54) Verfahren zum Deinken von bedrucktem Altpapier.

(30) Priorität: 10.06.81 DE 3122911

(43) Veröffentlichungstag der Anmeldung:
15.12.82 Patentblatt 82/50

(45) Bekanntmachung des Hinweises auf die Patenterteilung:
13.11.85 Patentblatt 85/46

(84) Benannte Vertragsstaaten:
AT BE CH DE FR GB IT LI LU NL SE

(56) Entgegenhaltungen:
EP - A - 0 040 873
DE - B - 2 211 578
DE - B - 2 408 523

ABSTRACT BULLETIN OF THE INST. OF PAPER CHEM.,
Band 50, Nr. 11, Mai 1980, Seite 1108, rechte Spalte,
Zusammenfassung 10355, Appleton, Wisc., USA, H.
STETTLER: "Special problems in deinking waste paper"
TAPPI JOURNAL OF THE TECHNICAL ASSOCIATION
OF THE PULP AND PAPER INDUSTRY, Band 63, Nr. 4,
April 1980, Seiten 119-122, Atlanta, GA., USA, D.
LACHENAL et al.: "Hydrogen peroxide as a delignifying
agent"
TAPPI, Band 63, Nr. 9, September 1980, Seiten 113-116,
Atlanta, GA, USA, L. PFALZER: "Deinking of secondary
fibers. A comparison of washing and flotation"

(73) Patentinhaber: Benckiser-Knapsack GmbH, Dr.
Albert-Reimann-Strasse 2, D-6802 Ladenburg (DE)

(72) Erfinder: Nötzel, Siegfried, Dr. Dipl.-Chem.,
Silbergasse 38, D-6901 Wilhelmsfeld (DE)
Erfinder: Scholl, Margarete, Gothaer Weg 19,
D-6800 Mannheim 31 (DE)
Erfinder: Ballreich, Heinz, Hockenheimer Strasse 78,
D-6831 Neulussheim (DE)

(74) Vertreter: Patentanwälte Zellentin,
Zweibrückenstrasse 15, D-8000 München 2 (DE)

**0 066 894**

## Beschreibung

Die Erfindung betrifft ein Verfahren zum Aufbereiten von bedrucktem Altpapier mittels Flotationsdeinking zur Entfernung von Druckfarben.

Die Wiederverwendung von Altpapier gewinnt im Hinblick auf die Holzverknappung und steigende Energiekosten mehr und mehr an Bedeutung. Eine Steigerung des Altpapiereinsatzes steht jedoch in engem Zusammenhang mit der Verbesserung der Qualität des Altpapierstoffes, insbesondere seiner optischen Eigenschaften, d. h. des Weißgrades. Zur Regenerierung des wertvollen Rohstoffes wurden in den letzten Jahrzehnten Deinkingverfahren entwickelt, die breite industrielle Anwendung fanden. Zum Abtrennen der Druckfarben-Teilchen von Faser- und Füllstoffen der Altpapiersuspensionen bewährte sich besonders das Wasch- und Flotationsverfahren. Das Flotations-Deinkingverfahren (Das Papier, 10 A, 1961, S. 546—554) beruht auf der unterschiedlichen Benetzbarkeit der aus der Faserstoff-Suspension zu entfernenden Druckfarbenteilchen, wobei man versucht, die Druckerschwärze so weit wie möglich zu entfernen. Diesen Vorgang bewerkstelligt man dadurch, daß man mit Hilfe geeigneter Chemikalien die Farbstoffteilchen vom Faserstoff ablöst und durch Luftzufuhr zum Flotieren bringt. Als Flotationshilfsmittel finden Alkalisalze von Fettsäuren, Tenside, wie beispielsweise ethoxylierte Fettsäuren oder Alkylbenzol-Sulfonate, die als Dispergatoren wirken sowie Komplexbildner wie Ethylendiamintetraessigsäure Verwendung. Als weitere Deinking-Chemikalien werden Natriumperoxid bzw. Wasserstoffperoxid und Natronlauge und Wasserglas als Peroxid-Stabilisator eingesetzt. Eine bekannte Deinking-Rezeptur kann folgende übliche Zusammensetzung zeigen:

| | |
|---|---|
| Natriumperoxid oder Wasserstoffperoxid | 1—2% |
| Wasserglas | 1—5% |
| Fettsäure | 0,6—1,2% |
| Komplexbildner (EDTA) | 0,2—0,4% |
| Natronlauge | 0—2% |
| Dispergator | 0,1—0,2% |

Über die Anwendung des Deinking-Verfahrens ist zahlreiche Literatur vorhanden. Als Beispiele seien genannt:

Bechstein G., Der Deinking-Flotationsprozeß, ein modernes Verfahren der Altpapier-Aufbereitung, Zellstoff und Papier 22, 1973, 11, S. 337—339;
Ortner, H., Wood, R. F., Gardemann, Deinking-Stand und Entwicklung, Wochenblatt für Papierfabrikation 103, 1975, 16, S. 597—601,
Weidhaas, AG, Erfahrungen mit Deinking-Anlage zur Erzeugung von Zeitungsdruckpapier, Wochenblatt für Papierfabrikation 104, 1976, 22, S. 857—865,
K. Schlaepfer, U. Fässler, P. Küng, Der Einfluß der Druckfarbe beim Deinking von Zeitungspapier, EMPA, 1974, St. Gallen.

Besondere Schwierigkeiten bereitet das als Peroxidstabilisator verwendete Wasserglas. In den Rohrleitungen des Systems scheiden sich Silikatablagerungen ebenso wie auf den Sieben, Filzen und Kalandern der Papiermaschine ab. Der mit Wasserglas versetzte, deinkte Papierstoff verursacht auf der Papiermaschine Entwässerungsschwierigkeiten, da Wasserglas die Wirkung von Rententionsmitteln und Entwässerungsbeschleunigern stark mindert. Das Abwasser aus der Deinking-Anlage läßt sich bei hohen Wasserglasanteilen nur schwer unter Behandlung mit Flockungsmitteln klären. Der mit Wasserglas versetzte Papierstoff zeigt vielfach Festigkeitsverluste, Vergilbungserscheinungen und unbefriedigende Weißgrade.

Aus der Bleiche von Textilien ist bekannt, daß Peroxide unter Ersatz von Wasserglas mit Hilfe von Phosphonsäuren stabilisiert werden können, siehe z. B. DE-B 2 211 578. Mit den dort genannten Mitteln ist jedoch eine Steigerung des Weißgrades nicht möglich.

Weiterhin ist aus Abstract Bulletin Inst. Paper Chem. 50/11 bekannt, daß Deinkingverfahren auch in Abwesenheit von Wasserglas durchgeführt werden können. Diese Literatur zeigt jedoch ebenfalls nicht auf, mit welchen Mitteln der Weißgrad des Produktes gesteigert werden kann.

Überraschenderweise wurde gefunden, daß die Nachteile von Wasserglas als Peroxidstabilisator vermieden und gleichzeitig ein höherer Weißgrad erzielt werden kann, wenn man beim Flotationsdeinking von bedrucktem Altpapier dem Papierstoff eine Mischung aus 1,2,4-Tricarboxybutan-2-phosphonsäure und einer Aminoalkanphosphonsäure der allgemeinen Formel gemäß Anspruch oder deren Kalium-, Natrium- oder Ammoniumsalze zusetzt.

Das erfindungsgemäße Verfahren wird bevorzugt in Gegenwart von Zusätzen, wie Trinatriumphosphat und/oder anorganischen Magnesiumverbindungen durchgeführt.

Als Netzmittel wird vorgeschlagen, Isotridekanolpolyglykoläther zu verwenden. Das Mischungsverhältnis der Phosphonsäuren untereinander beträgt vorteilhaft 4 : 1 bis 1 : 4.

Mit dem Einsatz der genannten Kombination läßt sich gleichzeitig der Zusatz weiterer Komplexbildner, wie beispielsweise Ethylendiamintetraessigsäure sowie der Zusatz von Fettsäuren einsparen.

2

Der Einsatz des neu gefundenen Deinking-Hilfsmittels kann je nach Art der Verfahrensweise im Lösepulper, Stoffpulper oder Chemikalienpulper erfolgen.

Die nach dem erfindungsgemäßen Verfahren erhaltenen deinkten Papiere können für Zeitungsdruck, für Tissue- oder Hygiene-Papiere, wie auch für Schreib- und Druckpapiere Anwendung finden.

### Beispiel 1 (Vergleichsbeispiel)

200 g Papiergemisch, bestehend aus 100 g Tageszeitungen und 100 g Illustrierten wurden 5 Minuten bei einer Stoffdichte von 4% aufgeschlagen. Die Temperatur betrug 50° C. Während des Aufschlagens wurden folgende Chemikalien, bezogen auf den Papiereintrag, zudosiert:

5 Gewichtsprozent Natriumwasserglas (37/40° Bé)
0,3 Gewichtsprozent Diethylentriaminpentaacetat
2 Gewichtsprozent Wasserstoffperoxid (30prozentig)
2 Gewichtsprozent Natriumhydroxid
1 Gewichtsprozent Seife
0,1 Gewichtsprozent Isotridekanolpolyglykoläther · 15 EO.

Der pH-Wert betrug 8,5, die Quellzeit 30 Minuten. Der Papierstoff wurde mit Wasser von 25° dH auf 0,8 Gewichtsprozent Stoffdichte verdünnt und 15 bzw. 30 Minuten in einer Voith-Flotationszelle flotiert. Nach dem Absäuern des deinkten Stoffes mit Aluminiumsulfat auf einen pH-Wert von 5,0 wurden auf einem Blattbildungsgerät Prüfblätter hergestellt.

Folgende Weißgrade wurden am Weißgradmesser ermittelt:

| Prozeßdauer | Weißgrad |
| --- | --- |
| 15 Minuten | 51,3 |
| 30 Minuten | 53,6 |
| Die Randstreifenweiße betrug | 62,3 |

### Beispiel 2

Es wurde wie in Beispiel 1 verfahren, 5% Natriumwasserglas und 0,3 Gewichtsprozent DTPA wurden jedoch durch 0,1% eines Gemisches aus 80 Teilen 1,2,4-Tricarboxybutan-2-phosphonsäure und 20 Teilen Diethylentriaminpentamethylenphosphonsäure ersetzt.

| Prozeßdauer | Weißgrad |
| --- | --- |
| 15 Minuten | 56,4 |
| 30 Minuten | 58,9 |

### Beispiel 3

Es wurde wie in Beispiel 1 verfahren, 5% Natriumwasserglas und 0,3 Gewichtsprozent DTPA wurden jedoch durch 0,2% eines Gemisches aus

40 Teilen 1,2,4-Tricarboxybutan-2-phosphonsäure
10 Teilen Diethylentriaminpentamethylenphosphonsäure
4 Teilen Trinatriumphosphat
46 Teile Wasser

ersetzt.

| Prozeßdauer | Weißgrad |
|---|---|
| 15 Minuten | 58,4 |
| 30 Minuten | 61,0 |

### Beispiel 4

Es wurde wie in Beispiel 1 verfahren, 5 Gewichtsprozent Natriumwasserglas und 0,3 Gewichtsprozent DTPA wurden jedoch durch 0,2 Gewichtsprozent eines Gemisches aus

40 Teilen  1,2,4-Tricarboxybutan-2-phosphonsäuren
10 Teilen  N,N-Dicarboxymethan-1-aminoethan-1,1-diphosphonsäure
 4 Teilen  Trinatriumphosphat

ersetzt.

| Prozeßdauer | Weißgrad |
|---|---|
| 15 Minuten | 59,1 |
| 30 Minuten | 61,2 |

### Beispiel 5

Es wurde wie in Beispiel 1 verfahren, jedoch wurden 5 Gewichtsprozent Wasserglas und 0,3 Gewichtsprozent DTPA durch 0,2 Gewichtsprozent eines Gemisches aus

18 Teilen  1,2,4-Tricarboxybutan-2-phosphonsäure
10 Teilen  N,N-Dicarboxymethan-1-aminoethan-1,1-diphosphonsäure und
 2 Teilen  Magnesiumoxid bzw. Magnesiumsulfat

ersetzt.

| Prozeßdauer | Weißgrad |
|---|---|
| 15 Minuten | 59,3 |
| 30 Minuten | 60,7 |

**Patentansprüche**

1. Verfahren zum Flotationsdeinken von bedrucktem Altpapier, in Gegenwart von Natriumhydroxid und/oder Natriumperoxid oder $H_2O_2$, und Netzmitteln, dadurch gekennzeichnet, daß man dem Papierstoff eine Mischung aus 1,2,4-Tricarboxybutan-2-phosphonsäure und einer Aminoalkanphosphonsäure der allgemeinen Formel

$$R_1 - \underset{\underset{R_2}{|}}{\overset{\overset{PO_3H_2}{|}}{C}} - R_3$$

in der

$$R^1 = H \quad -CH_3 \quad -NH_2 \quad -CH_2OH \quad -(CH_2)_nCH_3 \quad -(CH_2)_nCOOH$$

4

$$-N=C \begin{cases} (CH_2)_n \cdot NH_2 \\ (CH_2)_n CH_3 \end{cases}$$

$R^2 = H \quad -OH \quad -PO_3H_2$

$$-N \begin{cases} CH_2-PO_3H_2 \\ CH_2-PO_3H_2 \end{cases}$$

$-(CH_2)_n \cdot COOH$

$$-CH \begin{cases} (CH_2)_n COOH \\ (CH_2)_n COOH \end{cases}$$

$$-N \begin{cases} (CH_2)_n-N \begin{cases} CH_2PO_3H_2 \\ CH_2PO_3H_2 \end{cases} \\ (CH_2)_n-N \begin{cases} CH_2PO_3H_2 \\ CH_2PO_3H_2 \end{cases} \end{cases}$$

$$H_2O_3PH_2C-N-(CH_2)_n-N \begin{cases} CH_2PO_3H_2 \\ CH_2PO_3H_2 \end{cases}$$

5

$R^3 = H \quad -OH \quad -NH_2 \quad -CH_3 \quad -(CH_2)_nCH_3 \quad -(CH_2)_nCOOH$

$-NH-(CH_2)_n-PO_3H_2 \quad -NH \cdot CH_2COOH$

$$-N \Big\langle {{CH_2COOH} \atop {CH_2COOH}}$$

$n = 1-6$

bedeuten, wobei mindestens einer der Reste $R_1$ bis $R_3$ eine Aminogruppe aufweist, oder deren Kalium-, Natrium- oder Ammoniumsalze, zusetzt.

2. Verfahren nach Anspruch 1, dadurch gekennzeichnet, daß man es in Gegenwart von Trinatriumphosphat durchführt.

3. Verfahren nach Anspruch 1 oder 2, dadurch gekennzeichnet, daß man es in Gegenwart von anorganischen Magnesiumverbindungen durchführt.

4. Verfahren nach einem der Ansprüche 1 bis 3, dadurch gekennzeichnet, daß man es in Gegenwart von Isotridekanolpolyglykoläther als Netzmittel durchführt.

5. Verfahren nach einem der Ansprüche 1 bis 4, dadurch gekennzeichnet, daß das Mischungsverhältnis der Phosphonsäuren untereinander 4 : 1 bis 1 : 4 beträgt.

**Claims**

1. Process for flotation de-inking of printed waste paper, in the presence of sodium hydroxide and/or sodium peroxide or $H_2O_2$ and wetting agents, characterized in that there is added to the paper material a mixture of 1,2,4-tricarboxybutane-2-phosphonic acid and an aminoalkanephosphonic acid or potassium, sodium or ammonium salts thereof, the aminoalkane phosphonic acid having the general formula

$$\begin{array}{c} PO_3H_2 \\ | \\ R_1 - C - R_3 \\ | \\ R_2 \end{array}$$

in which

$R^1 = H \quad -CH_3 \quad -NH_2 \quad -CH_2OH \quad -(CH_2)_nCH_3 \quad -(CH_2)_nCOOH$

$$-N=C \Big\langle {{(CH_2)_n \cdot NH_2} \atop {(CH_2)_nCH_3}}$$

$R^2 = H \quad -OH \quad -PO_3H_2$

$$-N \Big\langle {{CH_2-PO_3H_2} \atop {CH_2-PO_3H_2}}$$

$-(CH_2)_n \cdot COOH$

$$-CH \Big\langle {{(CH_2)_nCOOH} \atop {(CH_2)_nCOOH}}$$

$$(CH_2)_n\text{—N}\begin{array}{l}\diagup\ CH_2PO_3H_2\\ \diagdown\ CH_2PO_3H_2\end{array}$$

$$\text{—N}\begin{array}{l}\diagup\\ \diagdown\end{array}$$

$$(CH_2)_n\text{—N}\begin{array}{l}\diagup\ CH_2PO_3H_2\\ \diagdown\ CH_2PO_3H_2\end{array}$$

$$H_2O_3PH_2C\text{—N—}(CH_2)_n\text{—N}\begin{array}{l}\diagup\ CH_2PO_3H_2\\ \diagdown\ CH_2PO_3H_2\end{array}$$

$$\begin{array}{l}\text{N—CH}_2PO_3H_2\\ \text{N}\begin{array}{l}\diagup\ CH_2PO_3H_2\\ \diagdown\ CH_2PO_3H_2\end{array}\end{array}$$

$$\begin{array}{l}CH_2\text{—N—CH}_2PO_3H_2\\ \text{N}\begin{array}{l}\diagup\ CH_2PO_3H_2\\ \diagdown\ CH_2PO_3H_2\end{array}\end{array}$$

$$R^3 = H \quad \text{—OH} \quad \text{—NH}_2 \quad \text{—CH}_3 \quad \text{—}(CH_2)_n CH_3 \quad \text{—}(CH_2)_n COOH$$

$$\text{—NH—}(CH_2)_n\text{—PO}_3H_2 \quad \text{—NH}\cdot CH_2COOH$$

$$\text{—N}\begin{array}{l}\diagup\ CH_2COOH\\ \diagdown\ CH_2COOH\end{array}$$

$$n = 1\text{–}6$$

at least one of the radicals $R_1$ to $R_3$ having an amino group.

2. A process according to Claim 1, characterized in that it is carried out in the presence of trisodium phosphate.

3. A process according to Claim 1 or 2, characterized in that it is carried out in the presence of inorganic magnesium compounds.

4. A process according to any one of Claims 1 to 3, characterized in that it is carried out in the presence of isotridecanol polyglycol ether as a wetting agent.

5. A process according to any one of Claims 1 to 4, characterized in that the mixture ratio of the phosphonic acids between themselves amounts to between 4 : 1 and 1 : 4.

**Revendications**

1. Procédé pour désencrer par flottation de vieux papiers imprimés, en présence d'hydroxyde de sodium et/ou de peroxyde de sodium ou de $H_2O_2$, et de mouillants, procédé caractérisé en ce qu'on ajoute à la pâte à papier un mélange d'acide tricarboxy-1,2,4 butanephosphonique-2 et d'un acide amino-alcane-phosphonique répondant à la formule générale:

$$R_1 - \overset{\overset{\textstyle PO_3H_2}{|}}{\underset{\underset{\textstyle R_2}{|}}{C}} - R_3$$

dans laquelle

$R^1$ = représente

$$H \quad -CH_3 \quad -NH_2 \quad -CH_2OH \quad -(CH_2)_nCH_3 \quad -(CH_2)_nCOOH \quad \text{ou}$$

$$-N=C \underset{\diagdown (CH_2)_nCH_3}{\overset{\diagup (CH_2)_n \cdot NH_2}{}}$$

$R^2$ = représente

$$H \quad -OH \quad -PO_3H_2$$

$$-N \underset{\diagdown CH_2-PO_3H_2}{\overset{\diagup CH_2-PO_3H_2}{}}$$

$$-(CH_2)_nCOOH$$

$$-CH \underset{\diagdown (CH_2)_nCOOH}{\overset{\diagup (CH_2)_nCOOH}{}}$$

$$-N \underset{\diagdown (CH_2)_n-N \underset{\diagdown CH_2PO_3H_2}{\overset{\diagup CH_2PO_3H_2}{}}}{\overset{\diagup (CH_2)_n-N \underset{\diagdown CH_2PO_3H_2}{\overset{\diagup CH_2PO_3H_2}{}}}{}}$$

$$H_2O_3PH_2C - \overset{\overset{\textstyle |}{|}}{N} - (CH_2)_n - N \underset{\diagdown CH_2PO_3H_2}{\overset{\diagup CH_2PO_3H_2}{}}$$

$$\begin{array}{cc} \underset{\displaystyle N-CH_2PO_3H_2}{\overset{\displaystyle |}{\phantom{.}}} & \underset{\displaystyle CH_2-N-CH_2PO_3H_2}{\overset{\displaystyle |}{\phantom{.}}} \\ CH_2PO_3H_2 & CH_2PO_3H_2 \\ N & N \\ CH_2PO_3H_2 & CH_2PO_3H_2 \end{array}$$

ou

$R^3$ = représente

$\phantom{-}H \quad -OH \quad -NH_2 \quad -CH_3 \quad -(CH_2)_nCH_3 \quad -(CH_2)_nCOOH$

$-NH-(CH_2)_n-PO_3H_2 \quad -NH \cdot CH_2COOH \quad$ ou

$$-N \overset{\displaystyle CH_2COOH}{\underset{\displaystyle CH_2COOH}{\phantom{N}}} \qquad \text{et}$$

n représente un nombre de 1 à 6,

avec la condition qu'au moins l'un des symboles $R_1$ à $R_3$ représente un radical amino, ou le leurs sels de sodium, de potassium ou d'ammonium.

2. Procédé selon la revendication 1 caractérisé en ce qu'on l'effectue en présence de phosphate trisodique.

3. Procédé selon l'une des revendications 1 et 2, caractérisé en ce qu'on l'effectue en présence de composés minéraux du magnésium.

4. Procédé selon l'une quelconque des revendications 1 à 3, caractérisé en ce qu'on l'effectue en présence d'un produit de polyéthoxylation de l'isotridécanol jouant le rôle de mouillant.

5. Procédé selon l'une quelconque des revendications 1 à 4, caractérisé en ce que le rapport entre les quantités des acides phosphoniques des deux types, dans le mélange, est compris entre 4 : 1 et 1 : 4.